# EUROPÄISCHE PATENTSCHRIFT

(11) **EP 1 245 462 B1**
(45) Veröffentlichungstag und Bekanntmachung des Hinweises auf die Patenterteilung: **07.12.2005**
(21) Anmeldenummer: 02004205.7
(22) Anmeldetag: 25.02.2002
(51) Int. Cl.: B60R 21/20, B60Q 5/00, B62D 1/04

(54) **Fahrzeuglenkrad**
Vehicle steering-wheel
Volant de véhicule

(30) Priorität: 06.03.2001 DE 20103890 U
(43) Veröffentlichungstag der Anmeldung: 02.10.2002
(73) Patentinhaber: TRW Automotive Safety Systems GmbH, 63743 Aschaffenburg (DE)
(72) Erfinder: Schütz, Dominik, 63857 Waldaschaff (DE)
(74) Vertreter: Kitzhofer, Thomas

(56) Entgegenhaltungen:
- EP-A- 0 539 869
- EP-A- 0 945 311
- US-B1- 6 183 005
- PATENT ABSTRACTS OF JAPAN vol. 1998, no. 06, 30. April 1998 (1998-04-30) & JP 10 035508 A (NIPPON NAME PLATE KOGYO KK;IZUMI JIDOSHA KK), 10. Februar 1998 (1998-02-10)

## Beschreibung

Die Erfindung betrifft ein Fahrzeuglenkrad, mit einem Lenkradkörper, einem in Achsrichtung zur Hupenbetätigung mittels Führungsstiften beweglich gelagerten Gassackmodul und wenigstens einer Multifunktionsschaltereinheit zur Fembetätigung von Fahrzeugfunktionen.

Ein großer Teil der inzwischen eingesetzten Fahrzeuglenkräder hat ein sogenanntes floating-horn-Gassackmodul. Dabei handelt es sich um ein in Achsrichtung (Achsrichtung heißt in Richtung der Lenkwelle) beweglich auf dem Lenkradkörper gelagertes Modul, das zur Hupenbetätigung verschoben wird. Neben dem Modul sind Multifunktionsschaltereinheiten immer häufiger aufzufinden, die ebenfalls am Lenkradkörper oder am Modul gelagert sind. Da durch die Betätigung der Multifunktionsschalter eine Kraft auf die Schaltereinheit ausgeübt wird und diese nahe am Modul angeordnet ist, muß vermieden werden, daß es bei der Multifunktionsschalterbetätigung versehentlich zur Hupenbetätigung kommt. Fahrzeugfunktionen, die von den Multifunktionsschaltern aus fernbedient werden, sind z.B. Tempomat, Radio, Telefon und dergleichen, jedoch nicht die Hupe, die ja durch Drücken des Moduls ausgelöst werden soll.

Ein Fahrzeuglenkrad mit schaltereinheiten ist aus US 6183005 B1 bekannt

Die Erfindung schafft ein Fahrzeuglenkrad, bei dem die Multifunktionsschaltereinheit und das Gassackmodul auf einfache Weise bewegungsentkoppelt werden, so daß eine versehentliche Hupenbetätigung bei der Benutzung der Multifunktionsschalter ausgeschlossen werden kann. Dies wird bei einem Fahrzeuglenkrad der eingangs genannten Art dadurch erreicht, daß die Multifunktionsschaltereinheit an den Führungsstiften des Gassackmoduls in axialer Richtung vom Gassackmodul bewegungsentkoppelt gelagert ist. Gemäß der Erfindung werden also die Führungsstifte des Moduls selbst zur Befestigung der Multifunktionsschaltereinheit verwendet, so daß die Führungsstifte eine Doppelfunktion haben. Positiver Nebeneffekt hierbei ist, daß der Spalt zwischen dem Modul und der seitlich an ihn angrenzenden Multifunktionsschaltereinheit konstant und gering gehalten werden kann. Bei einem erfindungsgemäßen Fahrzeuglenkrad ist also für die Entkoppelung von Multifunktionsschaltereinheit und Gassackmodul kein großer baulicher Aufwand zu treiben.

Gemäß der bevorzugten Ausführungsform bilden das Modul und die Multifunktionsschaltereinheit eine vormontierte Einheit und können somit als Einheit am Lenkradkörper befestigt werden, was die Lagetoleranzen gering hält.

Die vormontierte Einheit wird vorzugsweise dadurch gebildet, daß Modul und Multifunktionsschaltereinheit über die Führungsstifte miteinander verbunden sind, wodurch bislang benötigte Trägerbleche für die vormontierte Einheit vollständig entfallen können.

Falls die Führungsstifte beim Betätigen des Moduls mit bewegt werden, kann durch eine Feder die Stellung der Multifunktionsschaltereinheit festgelegt werden, so daß auch eine gewisse Reibung zwischen den Führungsstiften und der Multifunktionsschaltereinheit nicht zum Bewegen des Moduls oder der Multifunktionsschaltereinheit führen kann, je nachdem, welches der beiden Teile betätigt wird. Die Feder ist nämlich so angeordnet, daß sie die Multifunktionsschaltereinheit in ihre Einbaulage drückt.

Die Federn sind hierzu vorzugsweise zwischen dem Modul und der Multifunktionsschaltereinheit angeordnet, wobei die Feder gleichzeitig der Rückstellung des Moduls nach erfolgter Hupenbetätigung dienen kann.

Eine Ausführungsform sieht vor, daß die Führungsstifte im Modul gehaltert sind und einen von der Befestigung im Gassack-Modul entfernt vorgesehenen Anschlag haben. Zwischen dem Modul und dem Anschlag ist dann die Multifunktionsschaltereinheit auf den Führungsstiften verschieblich gelagert, so daß ohne weiteren baulichen Aufwand verhindert wird, daß sich die Multifunktionsschaltereinheit vom Modul löst, wenn beide Teile noch eine vormontierte Einheit bilden, also noch nicht am Lenkradkörper befestigt sind.

Auch denkbar ist es, daß auf den Führungsstiften Lagerbuchsen sitzen, die beim Aufsetzen der vormontierten Einheit in Aufnahmen im Lenkradkörper eingedrückt werden, so daß im Lenkradkörper vor der Montage der Einheit nicht einmal Lagerbuchsen montiert sein müssen. Vorzugsweise werden die Lagerbuchsen in einen umschäumten Bereich des Lenkradkörpers eingedrückt, was eine gewisse Nachgiebigkeit der Aufnahme sicherstellt. Die Lagerbuchsen können auch von der Multifunktionsschaltereinheit selbst gebildet werden.

Gerade wenn die Lagerbuchsen in einen geschäumten Bereich eingedrückt werden, muß verhindert werden, daß die gesamte Einheit wieder leicht vom Lenkradkörper entfernt werden kann. Hierzu kann eine Schnappverbindung zwischen Modul und Lenkradkörper eingesetzt werden, die gleichzeitig als axialer Anschlag des Moduls dienen kann. Das bedeutet, daß die Schnappverbindung auch den Anschlag in der Grundstellung bei nicht betätigter Hupe definiert.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf ein erfindungsgemäßes Fahrzeuglenkrad,
- Figur 2 eine Schnittansicht durch die vormontierte Einheit, bestehend aus Modul, Multifunktionsschaltereinheit und Führungsstiften, die in Figur 1 zu sehen ist,
- Figur 3 einen Schnitt durch das Fahrzeuglenkrad mit montierter Einheit aus Figur 2 bei nicht betätigter Hupe und
- Figur 4 einen Schnitt nach Figur 3 bei betätigter Hupe.

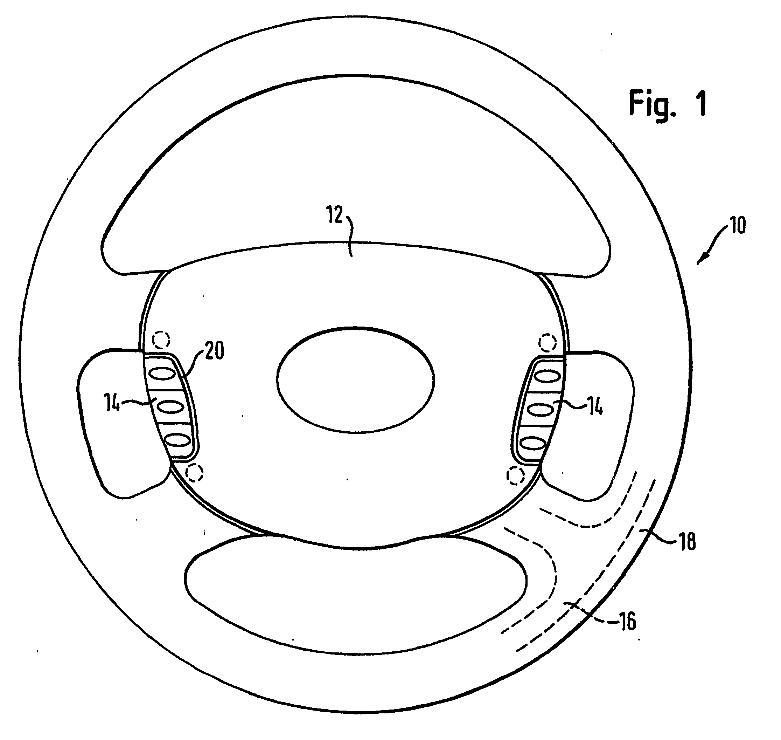

In Figur 1 ist ein Fahrzeuglenkrad dargestellt, das einen Lenkradkörper 10, ein Gassackmodul 12 und an den Seiten unmittelbar an das Gassackmodul 12 angrenzende Multifunktionsschaltereinheiten 14 zur Betätigung von Fahrzeugfunktionen, wie Radio, Telefon, Bordcomputer und dergleichen hat. Der Lenkradkörper besteht aus einem Lenkradskelett 16, das nur abschnittsweise dargestellt ist, und einer Umschäumung 18. Das Gassackmodul 12 ist in Achsrichtung, also in Figur 1 in Richtung senkrecht zur Zeichenebene, beweglich auf dem Lenkradkörper 10 gelagert, damit durch Drücken und Bewegen des Gassackmoduls 12 ein Hupenkontakt auf der Rückseite des Moduls geschlossen wird und die Hupe ertönt.

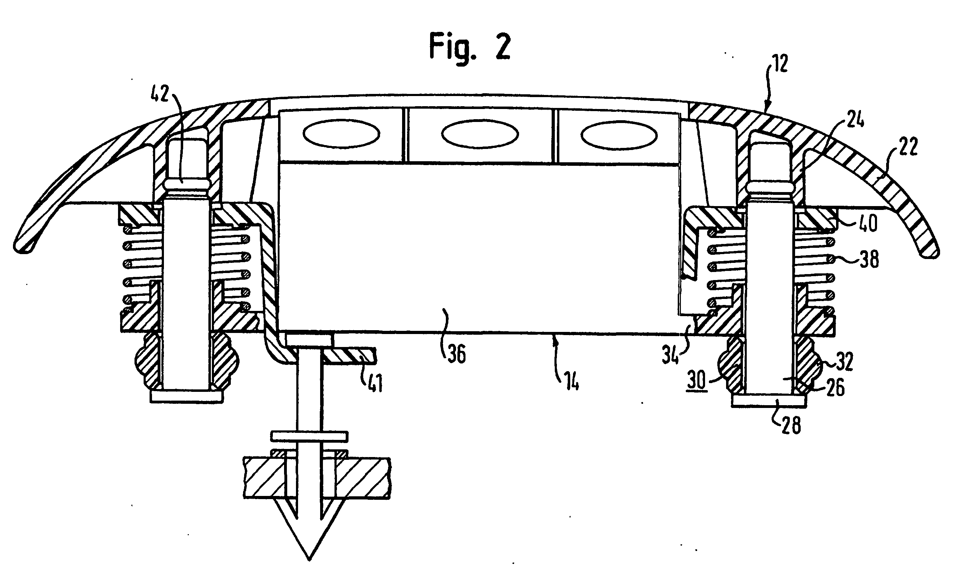

Das Gassackmodul 12 und die beiden Multifunktionsschaltereinheiten 14 sitzen so nahe nebeneinander, daß nur ein geringer Spalt 20 zwischen diesen Teilen gebildet ist. Im übrigen bilden Gassackmodul 12 und Multifunktionsschaltereinheiten 14 eine in sich geschlossene, vormontierte Einheit, die in dem in Figur 2 gezeigten Zustand komplett auf den Lenkradkörper 10 gesetzt und an ihm montiert wird.

In Figur 2 ist zu erkennen, daß das Gassackmodul eine Abdeckkappe 22 aus Kunststoff hat, von der rückseitig auf jeder Seite, angrenzend an die Multifunktionsschaltereinheit, hülsenförmige Vorsprünge 24 abstehen. In diese hülsenförmigen Vorsprünge 24 sind die Führungsstifte 26 für die axiale Lagerung des Gassackmoduls 12 eingepreßt. Die Führungsstifte 26 haben an ihrem freien, nicht eingepreßten Ende einen seitlich vorstehenden Bund, der als Anschlag 28 bei der Montage des Moduls wirkt. Auf den Führungsstiften 26 sitzen, angrenzend an den Anschlag 28, Kunststoff-Lagerbuchsen 30, die radial äußere ringförmige Fortsätze 32 haben. Zwischen den Vorsprüngen 24 und den Lagerbuchsen 30 sitzen ferner auf den Führungsstiften ohrenartige Vorsprünge 34 des Gehäuses 36 der Multifunktionsschaltereinheit 14, Druckfedern 38 und Lagerringe 40 für die Federn 38. An den Lagerringen 40 kann optional ein topfförmiges Halteteil 41 zur Aufnahme des Moduls 12 befestigt sein. Die Führungsstifte 26 können auch einstückig mit dem Halteteil 41 ausgebildet sein.

Dadurch, daß die Führungsstifte 26 in die Vorsprünge 24 eingepreßt sind und mittels ringförmigen Absätzen 42 an ihrem Außenumfang auch formschlüssig am Verlassen der Vorsprünge 24 gehindert sind, halten je zwei, einer Multifunktionsschaltereinheit 14 zugeordnete Führungsstifte 26, die Multifunktionsschaltereinheiten 14 am Modul 12 zur Bildung der vormontierten Einheit.

Die Federn 38 sind wirkungsmäßig zwischen dem eingepreßten Ende der Stifte 26 und damit zwischen Modul und Multifunktionsschaltereinheit 14 angeordnet und drücken die Multifunktionsschaltereinheiten 14 in die spätere Einbaulage, also nach unten. Trotzdem sind aufgrund der Verschiebbarkeit von Multifunktionsschaltereinheiten 14 und des Moduls 12 relativ zueinander Multifunktionsschaltereinheiten und Modul in axialer Richtung bewegungsentkoppelt. In radialer Richtung hingegen sind Multifunktionsschaltereinheiten 14 und Modul 12 über die Führungsstifte 26 fest miteinander gekoppelt, so daß nur ein geringer Spalt 20 entsteht, der auch unabhängig von der axialen Position von Multifunktionseinheiten 14 und Modul 12 zueinander stets konstant ist, da diese Teile auf derselben Führung sitzen.

Wie zu erkennen ist, hat die in Figur 2 dargestellte vormontierte Einheit keine Trägerbleche oder dergleichen, und die Einheit muß auch nicht zwingend auf ein feststehendes Trägerblech am Lenkradkörper 10 montiert werden.

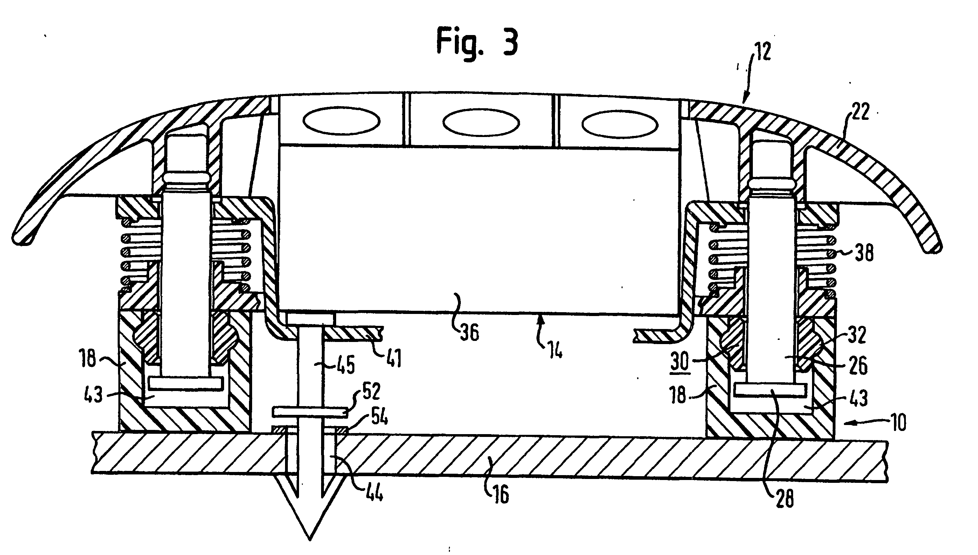

Zur Montage selbst wird die in Figur 2 gezeigte Einheit von oben nach unten auf den Lenkradkörper 10 gedrückt. In der Umschäumung sind Aufnahmen 43 für die Führungsstifte 26 samt ihrer Lagerbuchsen 30 ausgebildet. Dem Wulst 32 komplementäre Ausnehmungen sind ebenfalls vorhanden, um nach dem Einpressen einen Formschluß zwischen den Lagerbuchsen 30 und der Umschäumung 18 zu erzielen. Von der Unterseite des Moduls stehen Schnapphaken 45 ab, die durch Öffnungen 44 in der Nabe des Lenkradskelettes 16 beim Montieren hindurchwandern und anschließend verrasten, so daß eine Schnappverbindung gebildet wird (siehe Figur 3). Die Schnapphaken 45 bilden zugleich einen axialen Anschlag für das Modul, denn die Federn sind bestrebt, daß Modul nach oben zu drücken. Damit - für die in Figur 3 gezeigte Ausgangsstellung, bei der noch keine Hupenbetätigung vorliegt - auch die Schnapphaken 45 als axiale Anschläge für das Modul wirken, sind die Anschläge 28 im Gegensatz zur Situation in Figur 2 (Modul noch nicht eingebaut) von den Lagerbuchsen 30 axial beabstandet. Die Federn 38 drücken nicht nur das Modul 12 nach oben, sondern sie drücken die Multifunktionsschaltereinheiten 14 auch nach unten, in die montierte Endstellung, bei der die Multifunktionsschaltereinheiten an den Lagerbuchsen 30 und/oder dem Lenkradkörper 10 anliegen.

Durch diese definierte Stellung der Multifunktionsschaltereinheiten 14 kann es selbst bei Aufbringen eines bezüglich Figur 3 nach unten gerichteten Druckes auf die Multifunktionsschaltereinheiten 14 nicht zu einer versehentlichen Kontaktierung von Hupenkontakten 52, 54 kommen.

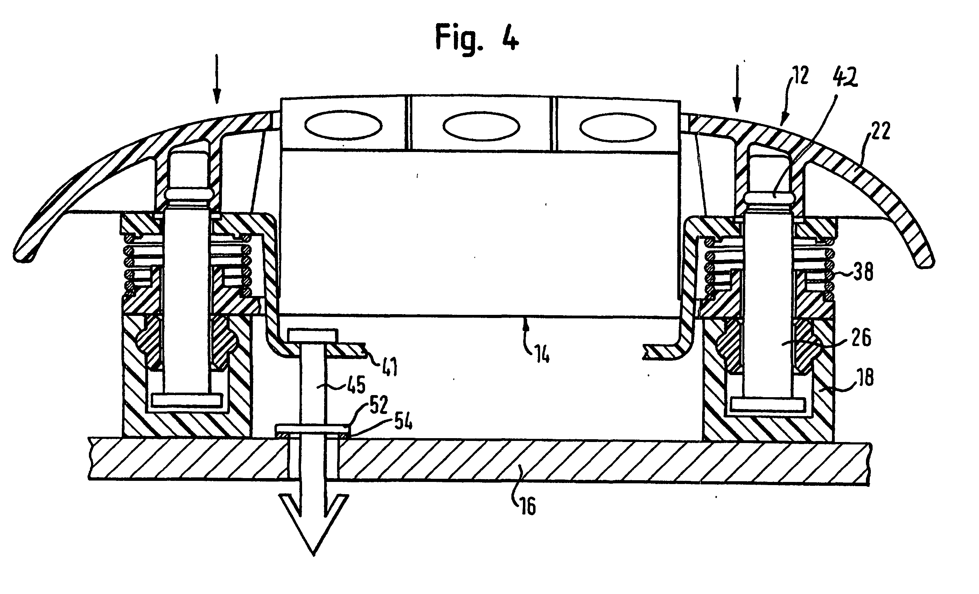

Beim Drücken des Moduls 12 nach unten zur Betätigung der Hupe muß das Modul 12 gegen die Kraft der Federn 38 nach unten gedrückt werden (siehe Figur 4). Die Federn 38 dienen auch der Rückstellung des Moduls in die in Figur 3 gezeigte Ausgangsstellung, so daß auf der Rückseite des Moduls außer den Führungsstiften 26 und den Haken 45 keine bislang üblichen Aufnahmen zur Lagerung von Rückstellfedern vorgesehen sein müssen. Somit kann auch der axiale Bauraum gering gehalten werden.

Der Anschlag 28 muß nach der Montage des Moduls und der Multifunktionsschaltereinheit im Lenkrad nicht zwingend vorhanden sein. Auch bis zur Montage wäre denkbar, ohne den Anschlag 28 auszukommen. Beispielsweise könnte die Feder 38 das Gassackmodul und die Multifunktionsschaltereinheit aneinander halten.

Alternativ könnten die Lagerbuchsen 30 auch durch die Multifunktionsschaltereinheit gebildet werden.

Bei einem Lenkrad ohne Gassack-Modul hingegen könnte die Schnappverbindung ohne weiteres weggelassen werden, so daß deren Eigenschaften nur durch den Anschlag 28 erzielt werden.

## Patentansprüche

1. Fahrzeuglenkrad, mit
einem Lenkradkörper (10),
einem in Achsrichtung zur Hupenbetätigung mittels Führungsstiften (26) beweglich gelagerten Gassackmodul (12) und
wenigstens einer Multifunktionsschaltereinheit (14) zur Fernbetätigung von Fahrzeugfunktionen,
**dadurch gekennzeichnet, daß** die Multifunktionsschaltereinheit (14) an den Führungsstiften (26) des Gassackmoduls (12) in axialer Richtung vom Gassack-modul (12) bewegungsentkoppelt gelagert ist.

2. Fahrzeuglenkrad nach Anspruch 1, **dadurch gekennzeichnet, daß** das Gassackmodul (12) und die Multifunktionsschaltereinheit (14) eine vormontierte Einheit bilden.

3. Fahrzeuglenkrad nach Anspruch 2, **dadurch gekennzeichnet, daß** das Gassackmodul (12) und die Multifunktionsschaltereinheit (14) über die Führungsstifte (26) als vormontierte Einheit miteinander verbunden sind.

4. Fahrzeuglenkrad nach einem der vorhergehenden Ansprüche, **dadurch gekennzeichnet, daß** wenigstens eine Feder (38) vorgesehen ist, die die Multifunktionsschaltereinheit (14) in ihre Einbaulage drückt.

5. Fahrzeuglenkrad nach Anspruch 4, **dadurch gekennzeichnet, daß** die Feder (38) zwischen dem Gassackmodul (12) und der Multifunktionsschaltereinheit (14) angeordnet ist.

6. Fahrzeuglenkrad nach Anspruch 4 oder 5, **dadurch gekennzeichnet, daß** die Feder (38) so angeordnet ist, daß sie eine Kraft zur Rückstellung des Gassackmoduls (12) nach erfolgter Hupenbetätigung ausübt.

7. Fahrzeuglenkrad nach einem der Ansprüche 4 bis 6, **dadurch gekennzeichnet, daß** sich ein Führungsstift (26) durch die Feder (38) erstreckt.

8. Fahrzeuglenkrad nach einem der vorhergehenden Ansprüche, **dadurch gekennzeichnet, daß** die Führungsstifte (26) im Gassackmodul (12) gehaltert sind und einen von der Befestigung im Gassackmodul (12) entfernt vorgesehenen Anschlag (28) haben, wobei zwischen Gassackmodul (12) und Anschlag (28) die Multifunktionsschaltereinheit (14) auf den Führungsstiften (26) verschieblich gelagert ist.

9. Fahrzeuglenkrad nach einem der vorhergehenden Ansprüche, **dadurch gekennzeichnet, daß** das Gassackmodul (12) und die Multifunktionsschaltereinheit (14) durch die Führungsstifte (26) als vormontierte Einheit miteinander verbunden sind und daß auf den Führungsstiften (26) Lagerbuchsen (30) sitzen, die beim Aufsetzen der vormontierten Einheit in Aufnahmen (40) im Lenkradkörper (10) eingedrückt werden.

10. Fahrzeuglenkrad nach einem der vorhergehenden Ansprüche, **dadurch gekennzeichnet, daß** als axialer Anschlag des Gassackmoduls eine Schnappverbindung zwischen Gassackmodul (12) und Lenkradkörper (10) vorgesehen ist, die die Grundstellung des Gassackmoduls (14) bei nicht betätigter Hupe in axialer Richtung definiert.

## Claims

1. A vehicle steering wheel, comprising
a steering wheel body (10),
a gas bag module (12) which for actuation of the horn is movably mounted in the axial direction by means of guide pins (26), and
at least one multifunctional switch unit (14) for the remote actuation of vehicle functions,
**characterized in that** the multifunctional switch unit (14) is mounted on the guide pins (26) of the gas bag module (12) so as to be movable in the axial direction independently of the gas bag module (12).

2. The vehicle steering wheel according to Claim 1, **characterized in that** the gas bag module (12) and the multifunctional switch unit (14) form a preassembled unit.

3. The vehicle steering wheel according to Claim 2, **characterized in that** the gas bag module (12) and the multifunctional switch unit (14) are connected with each other via the guide pins (26) to form a preassembled unit.

4. The vehicle steering wheel according to any of the preceding claims, **characterized in that** at least one spring (38) is provided, which urges the multifunctional switch unit (14) into its installation position.

5. The vehicle steering wheel according to Claim 4, **characterized in that** the spring (38) is arranged between the gas bag module (12) and the multifunctional switch unit (14).

6. The vehicle steering wheel according to Claim 4 or 5, **characterized in that** the spring (38) is arranged such that it exerts a force for restoring the gas bag module (12) after an actuation of the horn has occurred.

7. The vehicle steering wheel according to any of Claims 4 to 6, **characterized in that** a guide pin (26) extends through the spring (38).

8. The vehicle steering wheel according to any of the preceding claims, **characterized in that** the guide pins (26) are supported in the gas bag module (12) and have a stop (28) provided at a distance from the fastening in the gas bag module (12), the multifunctional switch unit (14) being displaceably mounted on the guide pins (26) between the gas bag module (12) and the stop (28).

9. The vehicle steering wheel according to any of the preceding claims, **characterized in that** the gas bag module (12) and the multifunctional switch unit (14) are connected with each other by the guide pins (26) to form a preassembled unit, and that bearing bushes (30) are seated on the guide pins (26) and are pressed into seats (40) in the steering wheel body (10) during placement of the preassembled unit.

10. The vehicle steering wheel according to any of the preceding claims, **characterized in that** a snap connection is provided as an axial stop of the gas bag module between the gas bag module (12) and the steering wheel body (10), the snap connection defining the basic position of the gas bag module (14) in the axial direction when the horn is in a non-actuated condition.

## Revendications

1. Volant de direction de véhicule, comportant
un corps de volant de direction (10),
un module de coussin à gaz (12) monté mobile en direction axiale au moyen de goupilles de guidage (26), pour actionner le klaxon, et
au moins une unité de commutation multifonction (14) pour la télécommande de fonctions du véhicule,
**caractérisé en ce que** l'unité de commutation multifonction (14) est montée sur les goupilles de guidage (26) du module de coussin à gaz (12) de manière à être découplée des mouvements du module de coussin à gaz (12) en direction axiale.

2. Volant de direction de véhicule selon la revendication 1, **caractérisé en ce que** le module de coussin à gaz (12) et l'unité de commutation multifonction (14) forment une unité préassemblée.

3. Volant de direction de véhicule selon la revendication 2, **caractérisé en ce que** le module de coussin à gaz (12) et l'unité de commutation multifonction (14) sont reliés l'un à l'autre au moyen des goupilles de guidage (26) pour former une unité préassemblée.

4. Volant de direction de véhicule selon l'une des revendications précédentes, **caractérisé en ce qu'**il est prévu au moins un ressort (38) qui presse l'unité de commutation multifonction (14) dans sa position de montage.

5. Volant de direction de véhicule selon la revendication 4, **caractérisé en ce que** le ressort (38) est agencé entre le module de coussin à gaz (12) et l'unité de commutation multifonction (14).

6. Volant de direction de véhicule selon la revendication 4 ou 5, **caractérisé en ce que** le ressort (38) est agencé de telle sorte qu'il exerce une force pour ramener le module de coussin à gaz (12) après avoir actionné le klaxon.

7. Volant de direction de véhicule selon l'une des revendications 4 à 6, **caractérisé en ce qu'**une goupille de guidage (26) s'étend à travers le ressort (38).

8. Volant de direction de véhicule selon l'une des revendications précédentes, **caractérisé en ce que** les goupilles de guidage (26) sont supportées dans le module de coussin à gaz (12) et ont une butée (28) prévue à distance de la fixation dans le module de coussin à gaz (12), l'unité de commutation multifonction (14) étant montée de manière déplaçable sur les goupilles de guidage (26) entre le module de coussin à gaz (12) et la butée (28).

9. Volant de direction de véhicule selon l'une des revendications précédentes, **caractérisé en ce que** le module de coussin à gaz (12) et l'unité de commutation multifonction (14) sont reliés l'un à l'autre par les goupilles de guidage (26) pour former une unité préassemblée, et **en ce que** sur les goupilles de guidage sont situés des coussinets (30) qui sont pressés dans des logements (40) dans le corps de volant de direction (10) lors de la mise en place de l'unité préassemblée.

10. Volant de direction de véhicule selon l'une des revendications précédentes, **caractérisé en ce qu'**une liaison par enclenchement entre le module de coussin à gaz (12) et le corps de volant de direction (10) est prévue en tant que butée axiale du module de coussin à gaz (12), laquelle définit la position de base du module de coussin à gaz (14) en direction axiale lorsque le klaxon n'est pas actionné.
